# FASCICULE DE BREVET EUROPEEN

(11) **EP 2 455 269 B1**
(45) Date de publication et mention de la délivrance du brevet: **17.12.2014**
(21) Numéro de dépôt: 11306278.0
(22) Date de dépôt: 03.10.2011
(51) Int. Cl.: B61F 5/50, B61H 7/08

(54) **Bogie de véhicule ferroviaire comprenant un dispositif de freinage à courants de Foucault**
Fahrgestell eines Schienenfahrzeugs, das über eine Wirbelstrom-Bremsvorrichtung verfügt
Rail vehicle bogie including an eddy-current braking device

(30) Priorité: 22.11.2010 FR 1059584
(43) Date de publication de la demande: 23.05.2012
(73) Titulaire: ALSTOM Transport Technologies, 92300 Levallois-Perret (FR)
(72) Inventeur: Cottin, Fabrice, 71670 Saint Firmin (FR); Liodenot, Frédéric, 71670 Le Breuil (FR)
(74) Mandataire: Jacobson, Claude

(56) Documents cités:
- EP-A2- 0 894 691
- FR-A1- 2 314 852

## Description

La présente invention concerne un bogie de véhicule ferroviaire, du type comprenant :
- un châssis s'étendant sensiblement longitudinalement,
- au moins un essieu s'étendant sensiblement transversalement et monté en rotation par rapport au châssis, une roue étant montée sur chacune des parties extrêmes transversales dudit essieu,
- un dispositif de freinage à courants de Foucault s'étendant sous le châssis et étant mobile en translation par rapport audit châssis entre une position rétractée, dans laquelle le dispositif de freinage est approché du châssis, et une position de freinage, dans laquelle le dispositif de freinage est éloigné du châssis, ledit dispositif de freinage comprenant au moins un élément de butée se déplaçant avec le dispositif de freinage entre la position escamotée et la position de freinage.

Le document EP-0 646 512 décrit par exemple un tel bogie de véhicule ferroviaire dans lequel un dispositif de freinage à courants de Foucault est mobile entre une position escamotée et une position de freinage.

Le freinage à courants de Foucault permet de ralentir un véhicule ferroviaire de façon efficace en ayant une longue durée de vie. En effet, le couple de freinage est généré par les courants induits entre un patin de freinage à courants de Foucault et un rail sur lequel circule le véhicule ferroviaire sans contact entre le patin et le rail, ce qui entraîne une très faible usure de ce patin. Pour que ce freinage soit efficace, il convient cependant de régler de façon précise l'entrefer entre le patin de freinage et le rail.

Le document EP-0 646 512 propose d'assurer le positionnement du patin de freinage par rapport au rail au moyen d'éléments de butée, solidaires du dispositif de freinage et mobiles avec celui-ci, venant en appui contre des surfaces de butée disposées dans les boîtes d'essieux lorsque le dispositif de freinage est en position de freinage. La position de la surface de butée est agencée pour qu'un entrefer prédéfini soit formé entre le patin de freinage et le rail lorsque l'élément de butée est en appui contre la surface de butée. Un tel dispositif de freinage présente l'avantage de permettre de suspendre le dispositif de freinage avec le châssis du bogie afin de limiter les masses non suspendues dans le véhicule ferroviaire. En effet, bien que le dispositif de freinage soit suspendu, on assure que l'entrefer sera constant en position de freinage puisque les surfaces de butée sont fixes en hauteur par rapport au rail car elles sont solidaires des essieux du bogie.

Cependant, un tel dispositif est encombrant car les éléments de butée s'étendent vers l'extérieur du châssis afin de se trouver en regard des boîtes d'essieux qui sont disposées sur les extrémités des essieux du côté de la face externe des roues. Ainsi, le dispositif de freinage présente une largeur importante supérieure à l'écartement entre les rails sur lesquels circule le véhicule ferroviaire. En outre, le dispositif de freinage n'est pas compatible avec tous les types de boîtes d'essieux. En effet, certaines boîtes d'essieux doivent présenter des dimensions réduites afin de pouvoir loger d'autres éléments sous le véhicule ferroviaire. Ces boîtes d'essieux et d'autres à l'architecture particulière ne permettent pas de disposer d'un espace suffisant pour prévoir la surface de butée destinée à coopérer avec un élément de butée du dispositif de freinage.

L'un des buts de l'invention est de pallier ces inconvénients en proposant un bogie de véhicule ferroviaire permettant l'utilisation d'un dispositif de freinage suspendu peu encombrant, et de préférence adapté à tout type de bogies.

A cet effet, l'invention concerne un bogie de véhicule ferroviaire du type précité, dans lequel un composant délimitant une surface de butée est monté sur l'essieu, ladite surface de butée étant fixe en hauteur par rapport à l'essieu, ladite surface de butée étant disposée entre les roues montées sur les parties extrêmes transversales de l'essieu, l'élément de butée venant en appui contre la surface de butée lorsque le dispositif de freinage est en position de freinage.

Le fait de prévoir la surface de butée entre les roues du bogie permet d'avoir un dispositif de freinage d'encombrement réduit, puisque sa largeur n'a pas à être supérieure à l'écartement entre les rails sur lesquels circule le véhicule ferroviaire. En outre, la surface de butée n'est pas prévue dans les boîtes d'essieux, ce qui permet d'utiliser le dispositif de freinage avec tout type de bogies, quelle que soient la dimension et l'architecture des boîtes d'essieux.

Selon d'autres caractéristiques du bogie selon l'invention :
- le composant délimitant la surface de butée est formé par un boîtier, la surface de butée formant le fond dudit boîtier, ledit boîtier comprenant en outre un orifice traversant, le boîtier étant emmanché sur l'essieu par ledit orifice traversant ;
- le boîtier est fixé au dispositif de freinage par une bielle s'étendant sensiblement longitudinalement, ladite bielle étant articulée autour d'un axe sensiblement transversal, d'une part à l'une de ses parties extrêmes, sur le boîtier et, d'autre part à l'autre de ses parties extrêmes, sur le dispositif de freinage ;
- le dispositif de freinage est fixé au châssis par au moins une bielle s'étendant sensiblement longitudinalement, ladite bielle étant articulée autour d'un axe sensiblement transversal, d'une part à l'une de ses parties extrêmes, sur le dispositif de freinage et, d'autre part à l'autre de ses parties extrêmes, sur le châssis ;
- les parties extrêmes articulées sur le dispositif de freinage des bielles fixant le dispositif de freinage au boîtier et au châssis sont fixées sur un élément de fixation monté mobile en rotation sur un étrier solidaire du dispositif de freinage ;
- l'élément de butée est porté par un bras s'étendant sensiblement longitudinalement en regard d'une partie extrême d'un essieu entre les roues montées sur ledit essieu, la surface de butée étant disposée en regard dudit bras selon la direction longitudinale ;
- le dispositif de freinage comprend quatre bras portant chacun un élément de butée, le bogie comprenant deux essieux, chaque essieu comprenant un composant délimitant une surface de butée, chaque surface de butée étant disposée en regard de l'un desdits bras selon la direction longitudinale ;
- des moyens de déplacement vertical montés entre le châssis et le dispositif de freinage sont agencés pour déplacer le dispositif de freinage entre la position escamotée et la position de freinage ;
- l'essieu est fixé au châssis par l'intermédiaire de moyens de suspension ; et
- le dispositif de freinage comprend au moins un patin linéaire de freinage à courants de Foucault, ledit patin étant destiné, dans la position de freinage, à se rapprocher d'un rail sur lequel circule le bogie, ledit patin définissant un entrefer avec ledit rail.

D'autres aspects et avantages de l'invention apparaîtront à la lecture de la description qui suit, donnée à titre d'exemple et faite en référence aux dessins annexés, dans lesquels :
- la figure 1 est une représentation schématique de côté d'un bogie de véhicule ferroviaire selon l'invention, le dispositif de freinage étant en position escamotée,
- la figure 2 est une représentation schématique de côté du bogie de la figure 1, le dispositif de freinage étant en position de freinage,
- la figure 3 est une représentation schématique en perspective du dispositif de freinage et des essieux du bogie de la figure 1,
- la figure 4 est une représentation schématique de côté de l'élément de butée du dispositif de freinage et de la surface de butée en position escamotée et en position de freinage.

Dans la description, le terme « longitudinal » est défini par rapport à la direction selon laquelle circule le véhicule ferroviaire, c'est-à-dire la direction dans laquelle s'étendent les rails sur lesquels ce véhicule ferroviaire circule. Le terme « transversal » est défini par rapport à une direction sensiblement perpendiculaire à la direction longitudinale dans un plan horizontal, c'est-à-dire la direction selon laquelle les rails sont écartés l'un de l'autre.

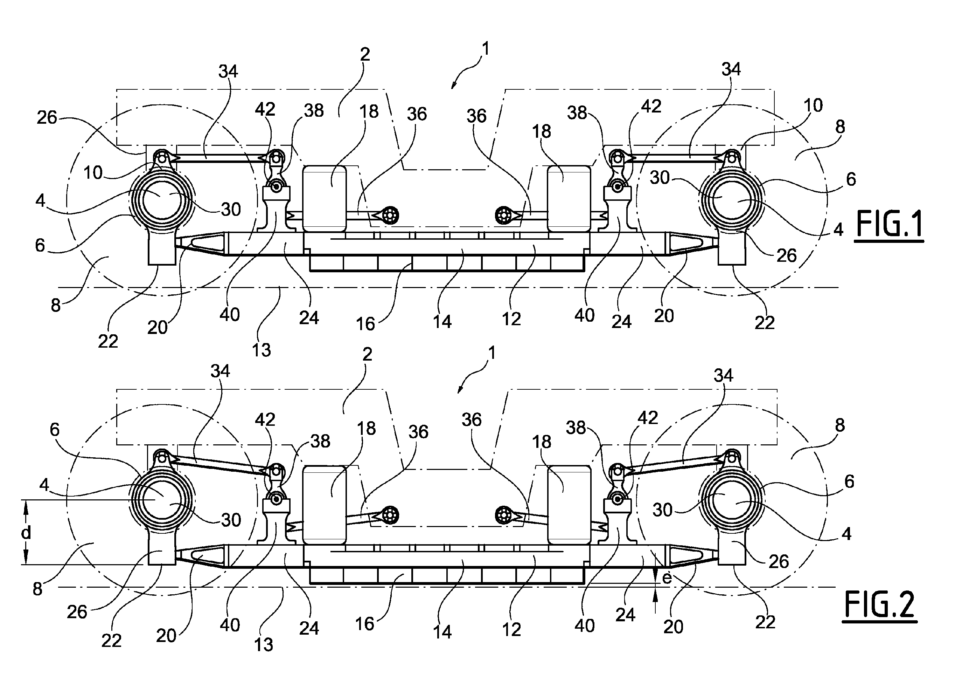

En référence aux figures 1 et 2, on décrit un bogie 1 de véhicule ferroviaire comprenant un châssis 2 s'étendant sensiblement longitudinalement et portant à chacune de ses parties extrêmes longitudinales un essieu 4 monté mobile en rotation dans deux boîtes d'essieux 6, chacune des boîtes d'essieux 6 étant disposée à une extrémité transversale de l'essieu 4. Chaque essieu 4 porte deux roues 8 fixées aux parties extrêmes transversales de l'essieu et solidaires en rotation de celui-ci. Les roues 8 sont adjacentes aux boîtes d'essieux 6 et sont disposées entre ces boîtes d'essieux 6. Pour des raisons de clarté, le châssis 2 et les essieux 4 sont représentés en pointillés sur les figures.

Dans la suite de la description, on désignera par « intérieur », l'espace s'étendant entre les roues 8 selon la direction transversale.

Les essieux 4 sont fixés au châssis 2 par des moyens de suspension 10. Le bogie 1 est donc suspendu, ce qui permet d'amortir les déformations, telles que les gauches de voies, entre les essieux 4 et le châssis 2. On notera que l'invention concerne aussi bien les bogies moteurs, c'est-à-dire comprenant des moyens de motorisation permettant d'entraîner un ou les deux essieux en rotation, que les bogies porteurs, c'est-à-dire des bogies dépourvus de moyens de motorisation.

Le bogie 1 comprend un dispositif de freinage 12 à courants de Foucault disposé sous le châssis 2, c'est-à-dire en regard des rails 13 sur lesquels le véhicule ferroviaire circule. Pour des raisons de clarté, seule une partie d'un rail 13 est représentée en pointillés sur les figures 1 et 2. Le dispositif de freinage 12 est formé par un cadre 14 s'étendant dans l'espace intérieur du bogie sous le châssis 2 et portant deux patins linéaires de freinage 16 à courant de Foucault s'étendant sensiblement longitudinalement sous le cadre 14. Ces patins 16 sont disposés en regard des rails 13 sur lesquels circule le véhicule ferroviaire. Le fonctionnement du freinage d'un dispositif de freinage à courants de Foucault sur les rails est connu et ne sera pas décrit en détail ici.

Le dispositif de freinage 12 est mobile entre une position rétractée (figure 1) et une position de freinage (figure 2). En position rétractée, le dispositif de freinage 12 est disposé contre le châssis 2 de sorte que les patins de freinage 16 sont éloignés des rails 13. En position de freinage, le dispositif de freinage 12 est descendu, c'est-à-dire éloigné du châssis 2, de sorte que les patins de freinage 16 sont rapprochés des rails 13 jusqu'à ce que le freinage puisse s'effectuer. En position de freinage, les patins de freinage 16 sont disposés en regard des rails 13 avec un entrefer e prédéfini séparant les patins de freinage 16 et les rails 13, comme représenté sur la figure 2. Cet entrefer e est par exemple sensiblement compris entre 5 mm et 10 mm. Selon un mode de réalisation particulier, l'entrefer e est sensiblement égal à 7 mm.

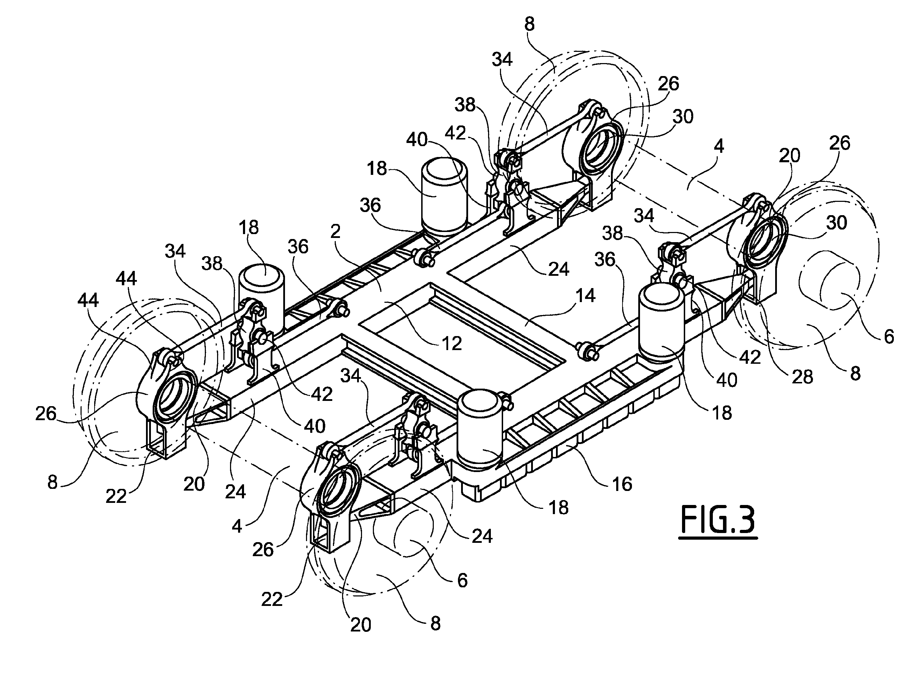

Le déplacement du dispositif de freinage 12 entre la position rétractée et la position de freinage se fait par des moyens de déplacement vertical 18 en translation. Ces moyens de déplacement 18 sont par exemple formés par des vérins comprenant chacun un corps solidaire du châssis 2 et une tige solidaire du cadre 14 mobile en translation par rapport au corps du vérin. Selon le mode de réalisation représenté sur la figure 3, les moyens de déplacement 18 comprennent quatre vérins agencés pour se déplacer simultanément afin d'avoir un déplacement régulier de l'ensemble du cadre 14. Ainsi, le cadre 14 reste dans un plan horizontal au cours de son déplacement.

Le dispositif de freinage 12 est donc solidaire du châssis 2 et est également suspendu avec celui-ci. C'est-à-dire que le dispositif de freinage 12 se déplace avec le châssis 2 lors de l'amortissement des déformations par les moyens de suspension 10.

Afin de référencer le positionnement des patins de freinage 16 en position de freinage, c'est-à-dire afin de régler le positionnement de ces patins 16 afin d'obtenir l'entrefer e prédéfini permettant le freinage, le dispositif de freinage 12 comprend au moins un élément de butée 20 coopérant avec une surface de butée 22, délimitée par un composant monté sur l'essieu 4, en position de freinage du dispositif de freinage 12.

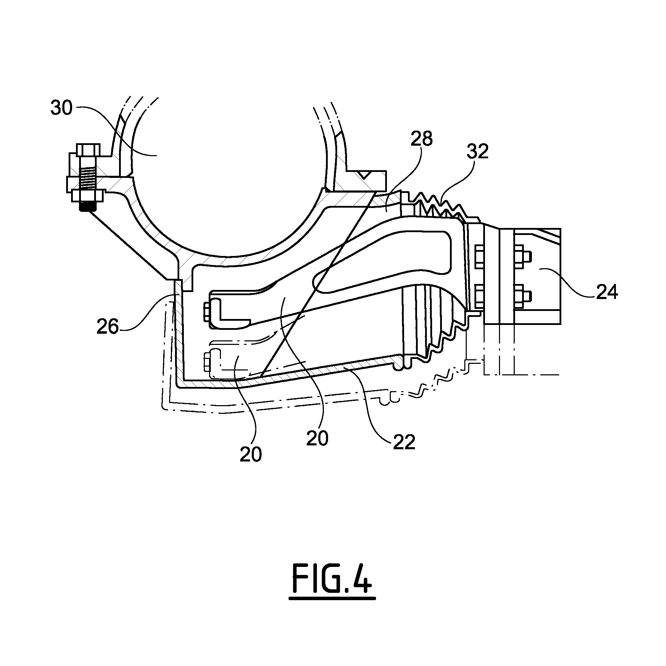

L'élément de butée 20, plus particulièrement représenté sur la figure 4, est porté par un bras 24 s'étendant sensiblement longitudinalement dans la continuité du cadre 14 en regard d'une partie extrême d'un essieu 4 entre les roues 8 dudit essieu 4. L'élément de butée 20 est formé par une patte d'appui s'étendant sensiblement longitudinalement dans la continuité du bras 24 vers la partie extrême de l'essieu 4. L'élément de butée 20 s'étend dans l'espace interne du bogie 1, c'est-à-dire qu'il ne « déborde » pas du châssis 2 en largeur.

Comme indiqué ci-dessus, l'élément de butée 20 coopère avec une surface de butée 22 en position de freinage du dispositif de freinage 12. Le composant délimitant la surface de butée 22 est un boîtier 26 monté sur l'essieu 4. La surface de butée 22, plus particulièrement représentée sur la figure 4, est formée par le fond du boîtier 26 fixé sur une partie extrême de l'essieu 4 entre les roues 8 dudit essieu 4, en regard du bras 24 selon la direction longitudinale. Le boîtier 26 comprend une ouverture 28 s'étendant en regard du bras 24 par laquelle l'élément de butée 20 pénètre dans le boîtier 26 de sorte à être disposé en regard de la surface de butée 22, comme représenté sur la figure 4. Le boîtier 26 comprend un orifice traversant 30 dont l'axe est confondu avec celui de l'essieu 4. Le boîtier 26 est emmanché sur l'essieu 4 par cet orifice traversant 30, comme représenté sur la figure 3. L'orifice 30 et l'essieu 4 sont agencés de sorte que l'essieu peut tourner à l'intérieur de l'orifice 30. A cet effet, des roulements à billes (non représentés) sont par exemple prévus entre l'essieu 4 et la paroi de l'orifice 30. Selon le mode de réalisation représenté sur la figure 4, l'extrémité du bras 24 et le boîtier 26 sont reliés l'un à l'autre par un soufflet 32, à l'intérieur duquel s'étend l'élément de butée 20. Ce soufflet 32 ferme l'ouverture 28 du boîtier 26 et permet de protéger l'élément de butée 20 de l'environnement extérieur, par exemple de projections, tout en permettant, en se déformant, le déplacement du bras 24 par rapport au boîtier 26 entre la position escamotée et la position de freinage.

Sur la figure 4, on a représenté en traits pleins la position de l'élément de butée 20 lorsque le dispositif de freinage 12 est en position escamotée et en traits pointillés la position de l'élément de butée 20 lorsque le dispositif de freinage 12 est en position de freinage. Comme on peut le voir sur cette figure, en position de freinage, le dispositif de freinage 12 est abaissé jusqu'à ce que l'élément de butée 20 vienne en appui sur la surface de butée 22.

La surface de butée 22 est fixe en hauteur par rapport au rail 13. En effet, la surface de butée 22 est reliée à l'essieu 4 par le boîtier 26, or cet essieu 4 est fixe en hauteur par rapport au rail 13, au contraire du châssis 2 et du dispositif de freinage 12 qui sont suspendus. Ainsi, lorsque l'élément de butée 20 est en appui contre la surface de butée 22, les patins de freinage 16 se trouvent à une hauteur fixe par rapport aux rails 13, cette hauteur étant déterminée par la hauteur de la surface de butée 22 par rapport aux rails 13 et donc par la distance d en hauteur séparant l'essieu 4 et la surface de butée 22, comme représenté sur la figure 2. Cette distance d est choisie de sorte que les patins de freinage 16 se trouvent à une distance e en hauteur des rails 13 correspondant à l'entrefer e lorsque le dispositif est en position de freinage. Ainsi, la position de la surface de butée 22 permet de référencer la position des patins de freinage 16 par rapport aux rails 13.

Les moyens de déplacement 18 sont agencés pour plaquer l'élément de butée 20 contre la surface de butée 22 en position de freinage. Ainsi, si le châssis 2 venait à se déplacer par rapport à l'essieu 4 par l'intermédiaire des moyens de suspension 10 au cours du freinage par le dispositif de freinage 12, les patins de freinage 16 restent séparés des rails 13 de la distance égale à l'entrefer e afin de continuer à assurer le freinage.

Le boîtier 26, d'une part, et le châssis 2, d'autre part, sont reliés au dispositif de freinage 12 par l'intermédiaire de bielles 34 et 36 s'étendant sensiblement longitudinalement. Ces bielles 34 et 36 sont articulées autour d'axes sensiblement transversaux, à l'une de leur partie extrême, sur un élément de fixation 38 monté mobile en rotation sur un étrier 40 solidaire du dispositif de freinage 12, et plus particulièrement du bras 24. L'élément de fixation 38 s'étend sensiblement verticalement et est fixé à l'étrier 40 par une liaison pivot 42 prévue sensiblement au centre de l'élément de fixation 38 et s'étendant selon un axe sensiblement transversal de sorte que l'élément de fixation 38 peut tourner par rapport à l'étrier 40 autour de cet axe transversal.

La bielle 34 reliant le boîtier 26 à l'élément de fixation 38 est articulée, à l'une de ses parties extrêmes, sur le boîtier 26 et, à l'autre de ses parties extrêmes, sur la partie supérieure de l'élément de fixation 38, c'est-à-dire au-dessus de la liaison pivot 42. La bielle 34 est reliée au boîtier 26 au dessus de l'orifice 30 et est articulée sur deux flasques 44 s'étendant sensiblement verticalement à partir de la paroi de l'orifice 30.

La bielle 36 reliant le châssis 2 à l'élément de fixation 38 est articulée, à l'une de ses parties extrêmes, sur le châssis 2 et, à l'autre de ses parties extrêmes, sur la partie inférieure de l'élément de fixation 38, c'est-à-dire en dessous de la liaison pivot 42.

Un tel agencement des bielles 34, 36 par rapport à l'élément de fixation 38 confère à cet élément de fixation 38 un mouvement de balancier lors du déplacement du châssis 2 par rapport à l'essieu 4 ou lors du déplacement du dispositif de freinage 12 entre ses positions escamotée et de freinage. Un tel mouvement permet de minimiser les moments de reprise de l'effort de freinage du dispositif de freinage à courants de Foucault 12 lorsque l'élément de butée 20 est en appui sur la surface de butée 22. Les bielles 34, 36 transmettent les efforts entre le boîtier 26 et le châssis 2. En outre, la bielle 34 reliant le boîtier 26 au dispositif de freinage 12 empêche que le boîtier 26 soit entraîné en rotation avec l'essieu 4 et fixe celui-ci par rapport à l'essieu 4 qui tourne à l'intérieur de l'orifice 30.

Selon le mode de réalisation représenté sur les figures, le cadre 14 du dispositif de freinage 12 comprend quatre bras 24 portant chacun un élément de butée 20, chaque essieu 4 comprenant deux boîtiers 26, chacun des boîtiers étant disposé en regard d'un des quatre bras 24. Les boîtiers 26 sont par exemple disposés de façon adjacente aux roues 8, entre celles-ci. Ainsi, chaque roue 8 est disposée entre un boîtier 26 sur son côté intérieur et une boîte d'essieu 6 sur son côté extérieur.

Le bogie 1 décrit ci-dessus permet de référencer le positionnement des patins de freinage 16 du dispositif de freinage 12 par rapport aux rails 13 en s'affranchissant de la structure des boîtes d'essieux 6 et en réduisant l'encombrement du bogie. En effet, les surfaces de butée 22 sont séparées des boîtes d'essieux 6, qui peuvent donc avoir tout type d'architecture appropriée, et s'étendent entre les roues 8, ce qui permet de réduire l'encombrement du dispositif de freinage 12. Ce dispositif de freinage 12 peut donc être utilisé avec tout type de bogie, quelle que soit l'architecture des boîtes d'essieux de celui-ci.

## Revendications

1. Bogie (1) de véhicule comprenant :
- un châssis (2) s'étendant sensiblement longitudinalement,
- au moins un essieu (4) s'étendant sensiblement transversalement et monté en rotation par rapport au châssis (2), une roue (8) étant montée sur chacune des parties extrêmes transversales dudit essieu (4),
- un dispositif de freinage (12) à courants de Foucault s'étendant sous le châssis (2) et étant mobile en translation par rapport audit châssis (2) entre une position rétractée, dans laquelle le dispositif de freinage (12) est approché du châssis (2), et une position de freinage, dans laquelle le dispositif de freinage (12) est éloigné du châssis (2), ledit dispositif de freinage (12) comprenant au moins un élément de butée (20) se déplaçant avec le dispositif de freinage (12) entre la position escamotée et la position de freinage,
**caractérisé en ce qu'**un composant délimitant une surface de butée (22) est monté sur l'essieu (4), ladite surface de butée (22) étant fixe en hauteur par rapport à l'essieu (4), ladite surface de butée (22) étant disposée entre les roues (8) montées sur les parties extrêmes transversales de l'essieu (4), l'élément de butée (20) venant en appui contre la surface de butée (22) lorsque le dispositif de freinage (12) est en position de freinage.

2. Bogie selon la revendication 1, dans lequel le composant délimitant la surface de butée (22) est formé par un boîtier, la surface de butée (22) formant le fond dudit boîtier (26), ledit boîtier (26) comprenant en outre un orifice traversant (30), le boîtier (26) étant emmanché sur l'essieu (4) par ledit orifice traversant (30).

3. Bogie selon la revendication 2, dans lequel le boîtier (26) est fixé au dispositif de freinage (12) par une bielle (34) s'étendant sensiblement longitudinalement, ladite bielle (34) étant articulée autour d'un axe sensiblement transversal, d'une part à l'une de ses parties extrêmes, sur le boîtier (26) et, d'autre part à l'autre de ses parties extrêmes, sur le dispositif de freinage (12).

4. Bogie selon l'une quelconque des revendications 1 à 3, dans lequel le dispositif de freinage (12) est fixé au châssis (2) par au moins une bielle (36) s'étendant sensiblement longitudinalement, ladite bielle (36) étant articulée autour d'un axe sensiblement transversal, d'une part à l'une de ses parties extrêmes, sur le dispositif de freinage (12) et, d'autre part à l'autre de ses parties extrêmes, sur le châssis (2).

5. Bogie selon la revendication 3 et 4, dans lequel les parties extrêmes articulées sur le dispositif de freinage (12) des bielles (34, 36) fixant le dispositif de freinage (12) au boîtier (26) et au châssis (2) sont fixées sur un élément de fixation (38) monté mobile en rotation sur un étrier (40) solidaire du dispositif de freinage (12).

6. Bogie selon l'une quelconque des revendications 1 à 5, dans lequel l'élément de butée (20) est porté par un bras (24) s'étendant sensiblement longitudinalement en regard d'une partie extrême d'un essieu (4) entre les roues (8) montées sur ledit essieu (4), la surface de butée (22) étant disposée en regard dudit bras (24) selon la direction longitudinale.

7. Bogie selon la revendication 6, dans lequel le dispositif de freinage (12) comprend quatre bras (24) portant chacun un élément de butée (2), le bogie comprenant deux essieux (4), chaque essieu (4) comprenant un composant délimitant une surface de butée (22), chaque surface de butée (22) étant disposée en regard de l'un desdits bras (24) selon la direction longitudinale.

8. Bogie selon l'une quelconque des revendications 1 à 7, dans lequel des moyens de déplacement vertical (18) montés entre le châssis (2) et le dispositif de freinage (12) sont agencés pour déplacer le dispositif de freinage (12) entre la position escamotée et la position de freinage.

9. Bogie selon l'une quelconque des revendications 1 à 8, dans lequel l'essieu (4) est fixé au châssis (2) par l'intermédiaire de moyens de suspension (10).

10. Bogie selon l'une quelconque des revendications 1 à 9, dans lequel le dispositif de freinage (12) comprend au moins un patin linéaire de freinage (16) à courants de Foucault, ledit patin (16) étant destiné, dans la position de freinage, à se rapprocher d'un rail (13) sur lequel circule le bogie, ledit patin (16) définissant un entrefer (e) avec ledit rail (13).

## Patentansprüche

1. Fahrzeug-Drehgestell (1), aufweisend:
- ein Chassis (2), das sich im Wesentlichen längs erstreckt,
- wenigstens eine Achse (4) die sich im Wesentlichen quer erstreckt und bezüglich des Chassis (2) rotierbar montiert ist, wobei ein Rad (8) an jedem von Quer-Endabschnitten der Achse (4) montiert ist,
- eine Wirbelstrom-Bremsvorrichtung (12), die sich unter dem Chassis (2) erstreckt und die translatorisch bewegbar ist bezüglich des Chassis (2) zwischen einer Einfahrposition, in welcher die Bremsvorrichtung (12) an das Chassis (2) heran eingefahren ist, und einer Bremsposition, in welcher die Bremsvorrichtung (12) von dem Chassis (2) weg ausgefahren ist, wobei die Bremsvorrichtung (12) wenigstens ein Anschlagelement (20) aufweist, das sich mit der Bremsvorrichtung (12) verlagert zwischen der Einfahrposition und der Bremsposition, **dadurch gekennzeichnet, dass** ein Bauteil, welches eine Anschlagfläche (22) begrenzt, an der Achse (4) montiert ist, wobei die Anschlagfläche (22) in der Höhe bezüglich der Achse (4) fix ist, wobei die Anschlagfläche(22) zwischen den Rädern (8) angeordnet ist, welche an den Quer-Endabschnitten der Achse (4) montiert sind, wobei das Anschlagelement (20) gegen die Anschlagfläche (22) in Anlage kommt, wenn die Bremsvorrichtung (12) in Bremsposition ist.

2. Drehgestell gemäß Anspruch 1, wobei das Bauteil, das die Anschlagfläche (22) begrenzt, von einem Kasten gebildet ist, wobei die Anschlagfläche (22) den Boden des Kastens (26) bildet, wobei der Kasten (26) ferner eine Durchgangsöffnung (30) hat, wobei der Kasten (26) mittels der Durchgangsöffnung (30) auf die Achse (4) aufgesetzt ist.

3. Drehgestell gemäß Anspruch 2, wobei der Kasten (26) an der Bremsvorrichtung (12) befestigt ist mittels einer Lenkstange (34), die sich im Wesentlichen längs erstreckt, wobei die Lenkstange (34) einerseits an einem ihrer Endabschnitte an dem Kasten (26) und andererseits am anderen ihrer Endabschnitte an der Bremsvorrichtung (12) um eine im Wesentlichen quer verlaufende Achse gelenkig gelagert ist.

4. Drehgestell gemäß irgendeinem der Ansprüche 1 bis 3, wobei die Bremsvorrichtung (12) an dem Chassis (2) befestigt ist durch wenigstens eine Lenkstange (36), die sich im Wesentlichen längs erstreckt, wobei die Lenkstange (36) einerseits an einem ihrer Endabschnitte an der Bremsvorrichtung (12) und andererseits am anderen ihrer Endabschnitte am Chassis (2) um eine im Wesentlichen quer verlaufende Achse gelenkig gelagert ist.

5. Drehgestell gemäß Anspruch 3 und 4, wobei die an der Bremsvorrichtung (12) gelenkig gelagerten Endabschnitte der Lenkstangen (34, 36), die die Bremsvorrichtung (12) am Kasten (26) und am Chassis (2) befestigen, an einem Befestigungselement (38) befestigt sind, welches an einer Konsole (40) drehbewegbar montiert ist, die mit der Bremsvorrichtung (12) fest verbunden ist.

6. Drehgestell gemäß irgendeinem der Ansprüche 1 bis 5, wobei das Anschlagelement (20) von einem Arm (24) getragen ist, der sich im Wesentlichen längs erstreckt gegenüber einem Endabschnitt einer Achse (4) zwischen den Rädern (8), die an dieser Achse (4) montiert sind, wobei die Anschlagfläche (22) der Längsrichtung nach gegenüber dem Arm (24) angeordnet ist.

7. Drehgestell gemäß Anspruch 6, wobei die Bremsvorrichtung (12) vier Arme (24) aufweist, von denen jeder ein Anschlagelement (2) trägt, wobei das Drehgestell zwei Achsen (4) aufweist, wobei jede Achse (4) ein Bauteil aufweist, das eine Anschlagfläche (22) begrenzt, wobei jede Anschlagfläche (22) der Längsrichtung nach gegenüber einem dieser Arme (24) angeordnet ist.

8. Drehgestell gemäß irgendeinem der Ansprüche 1 bis 7, wobei Vertikalverlagerungsmittel (18), die zwischen dem Chassis (2) und der Bremsvorrichtung (12) montiert sind, eingerichtet sind, um die Bremsvorrichtung (12) zwischen der Einfahrposition und der Bremsposition zu verlagern.

9. Drehgestell gemäß irgendeinem der Ansprüche 1 bis 8, wobei die Achse (4) an dem Chassis (2) befestigt ist bei Zwischenschaltung von Federmitteln (10).

10. Drehgestell gemäß irgendeinem der Ansprüche 1 bis 9, wobei die Bremsvorrichtung (12) wenigstens eine lineare Wirbelstrom-Bremskufe (16) aufweist, wobei die Kufe (16) dazu bestimmt ist, um sich in der Bremsposition einer Schiene (13) zu nähern, auf welcher das Drehgestell fährt, wobei die Kufe (16) einen Spalt (e) mit dieser Schiene definiert.

## Claims

1. A vehicle bogey (1), comprising:
- a frame (2) extending substantially longitudinally,
- at least one axle (4) extending substantially transversely and mounted rotatably relative to the frame (2), a wheel (8) being mounted on each of the transverse end portions of said axle (4),
- an eddy current brake device (12) extending under the frame (2) and translationally mobile relative to said frame (2) between a retracted position, in which the brake device (12) is brought close to the frame (2), and a braking position, in which the brake device (12) is moved away from the frame (2), said brake device (12) comprising at least one stop element (20) moving with the brake device (12) between the retracted position and the braking position,
**characterized in that** a component defining a stop surface (22) is mounted on the axle (4), said stop surface (22) being fixed in height relative to the axle (4), said stop surface (22) being arranged between the wheels (8) mounted on the transverse end portions of the axle (4), the stop element (20) bearing against the stop surface (22) when the brake device (12) is in the braking position.

2. The bogey according to claim 1, wherein the component defining the stop surface (22) is formed by a housing, the stop surface (22) forming the bottom of said housing (26), said housing (26) also comprising a through orifice (30), the housing (26) being fitted onto the axle (4) by said through orifice (30).

3. The bogey according to claim 2, wherein the housing (26) is attached to the brake device (12) by a connecting rod (34) substantially longitudinally, said connecting rod (34) being hinged around a substantially transverse axis, on the one hand at one of its end portions, on the housing (26) and, on the other hand, at the other of its end portions, on the brake device (12).

4. The bogey according to any one of claims 1 to 3, wherein the brake device (12) is attached to the frame (2) by at least one connecting rod (36) extending substantially longitudinally, said connecting rod (36) being articulated around a substantially transverse axis, on the one hand at one of its end portions, on the brake device (12), and on the other hand, at the other of its end portions, on the frame (2).

5. The bogey according to claim 3 and 4, wherein the end portions hinged on the brake device (12) of the connecting rods (34, 36) attaching the brake device (12) to the housing (26) and the frame (2) are fixed on a fastening element (38) mounted rotatably mobile on a bracket (40) secured to the brake device (12).

6. The bogey according to any one of claims 1 to 5, wherein the stop element (20) is supported by an arm (24) extending substantially longitudinally opposite an end portion of an axle (4) between the wheels (8) mounted on said axle (4), the stop surface (22) being arranged opposite the arm (24) in the longitudinal direction.

7. The bogey according to claim 6, wherein the brake device (12) comprises four arms (24) each supporting a stop element (2), the bogey comprising two axles (4), each axle (4) comprising a component defining a stop surface (22), each stop surface (22) being arranged opposite one of said arms (24) in the longitudinal direction.

8. The bogey according to any one of claims 1 to 7, wherein vertical displacement means (18) mounted between the frame (2) and the brake device (12) are arranged to move the brake device (12) between the retracted position and the braking position.

9. The bogey according to any one of claims 1 to 8, wherein the axle (4) is fixed to the frame (2) via suspension means (10).

10. The bogey according to any one of claims 1 to 9, wherein the brake device (12) comprises at least one linear eddy current brake shoe (16), said shoe (16) being intended, in the braking position, to come closer to a rail (13) on which the bogey (16) travels, said shoe (16) defining an air gap (e) with said rail (13).
